# EUROPÄISCHE PATENTSCHRIFT

(11) **EP 1 579 755 B1**
(45) Veröffentlichungstag und Bekanntmachung des Hinweises auf die Patenterteilung: **17.01.2007**
(21) Anmeldenummer: 05101972.7
(22) Anmeldetag: 14.03.2005
(51) Int. Cl.: A01D 41/12, A01F 12/40

(54) **Strohleitrechen**
Straw guiding rake
Râteau de guidage de paille

(30) Priorität: 24.03.2004 DE 102004014306
(43) Veröffentlichungstag der Anmeldung: 28.09.2005
(73) Patentinhaber: DEERE & COMPANY, Moline, Illinois 61265-8098 (US)
(72) Erfinder: Weichholdt, Dirk, 57200, Sarreguemines (FR)
(74) Vertreter: Holst, Sönke

(56) Entgegenhaltungen:
- EP-A- 1 074 176
- EP-A- 1 219 164
- DE-C1- 4 341 764
- DE-U1- 8 801 208

## Beschreibung

Die Erfindung betrifft einen Strohleitrechen mit einer Halterung, an der mehrere Finger beweglich angebracht sind, sowie einen Mähdrescher mit einem derartigen Strohleitrechen.

Bei der Ernte von Getreide und anderen Pflanzen mit einem Mähdrescher fällt ausgedroschenes, von Korn befreites Stroh an, das in der Regel entweder gehäckselt und näherungsweise über die Breite des Erntevorsatzes über das Feld verteilt oder in einem Schwad auf dem Feld abgelegt wird, um es später mit einer Ballenpresse o. dgl. aufzunehmen und weiterzuverwerten.

Bei der Ablage des Strohs in einem Schwad finden im Stand der Technik, s. DE 35 28 538 A, so genannte Strohleitrechen oder Strohabweiser Verwendung, die eine Anzahl nebeneinander angeordneter Finger aufweisen. Die Strohleitrechen sind an den Seiten der Strohverteilerhaube des Mähdreschers derart angeordnet, dass die Finger sich nach unten erstrecken, wobei die einzelnen Finger sich auf einer gedachten Linie befinden, die sich in Vorwärtsrichtung erstreckt. Die Finger liegen seitlich am Strohfluss an, um ihn zusammenzuführen und das Schwad in eine gewünschte Form zu bringen. Bei der Ausführungsform nach DE 35 28 538 A sind die Finger starr an der Strohverteilerhaube befestigt. Das hat unter anderem den Nachteil, dass keine Anpassung der Breite des Strohschwads an die Breite der Pickup der Ballenpresse möglich ist. Außerdem sind die Strohleitrechen in der Nähe des Strohhäckslers angeordnet, an dem von Zeit zu Zeit Wartungsarbeiten durchzuführen sind. Die Strohleitrechen stellen dort eine Gefahrenquelle für Verletzungen dar.

Die DE 88 01 208 U beschreibt einen an der Strohverteilerhaube eines Mähdreschers angeordneten Strohleitrechen eingangs genannter Art, dessen Finger jeweils einzeln beweglich an einer Halterung befestigt sind. Die Finger sind federnd oder werden durch die Kraft einer Feder in ihre Ruhestellung verbracht. Dadurch soll ein Verstopfen vermieden werden, wenn sich beim Anhalten des Mähdreschers eine hohe Menge an Stroh ansammelt.

Hier ist die Halterung der Finger starr am Mähdrescher angebracht, so dass sich ebenfalls die in Verbindung mit der Ausführungsform nach DE 35 28 538 A genannten Nachteile ergeben.

In der DE 43 41 764 C wird ein anderer Mähdrescher beschrieben, bei dem ein Strohhäcksler zwischen einer Häcksel- und einer Schwadablageposition verschiebbar angeordnet ist. Ein Strohleitrechen setzt sich aus einem Rohr mit starr daran angebrachten Fingern, einer Stange innerhalb des Rohrs und einer Mechanik zur Drehung der Stange sowie des Rohrs um die Stange zusammen. Die Stange ist an einer horizontalen, sich quer zur Fahrtrichtung erstreckenden, drehbaren Welle angeordnet. Ein Steuerstück und ein Anschlag dienen zur Drehung des Rohrs mit den Fingern um die Stange. Befindet sich der Strohhäcksler in der Häckselposition, erstreckt sich das Rohr von der Welle fast vertikal nach hinten und oben und die Finger erstrecken sich vom Rohr aus horizontal nach innen in Richtung auf die Längsmittelebene des Mähdreschers zu. Befindet sich der Strohhäcksler in der Schwadablageposition, erstreckt sich das Rohr von der Welle fast horizontal nach hinten und nur unwesentlich nach oben und die Finger erstrecken sich vom Rohr nach unten. Auch hier ist keine Möglichkeit zur Anpassung der Position der Finger an eine gewünschte Schwadbreite vorgesehen. Außerdem ist die Mechanik zur Bewegung der Finger, die eine Welle zur Drehung der Stange und weitere Elemente zur Drehung des Rohrs mit den Fingern um die Stange umfasst, relativ aufwändig.

Die der Erfindung zu Grunde liegende Aufgabe wird darin gesehen, einen Strohleitrechen bereitzustellen, bei dem die geschilderten Nachteile nicht oder in einem verminderten Maße vorliegen.

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Es wird vorgeschlagen, den Strohleitrechen mit einer Halterung und einem gegenüber der Halterung bewegbaren Verstellelement auszustatten. Die Finger liegen jeweils an der Halterung und am Verstellelement an. Durch eine Verstellung des Verstellelements gegenüber der Halterung kann die Position der Finger synchron verstellt werden. Dadurch ist beispielsweise eine Anpassung der Position der Finger an eine gewünschte Schwadbreite und eine Verstellung der Finger zwischen einer Schwadablageposition und einer Transportposition möglich. Der erfindungsgemäße Strohleitrechen ist relativ einfach und preiswert herstellbar.

In einer bevorzugten Ausführungsform erstrecken sich die Finger jeweils durch eine Öffnung in der Halterung und im Verstellelement. Durch die Öffnungen werden Zwangsbedingungen für die Finger realisiert, die zur gewünschten Verstellbewegung führen. Es wäre auch denkbar, die Finger statt durch die Öffnungen durch separate Lagerungen an der Halterung und am Verstellelement festzulegen, die durch Schellen oder andere Elemente realisiert werden können.

Um durch eine lineare Bewegung des Verstellelements eine wünschenswerte Bewegung der Finger zu erzielen, erweist es sich als sinnvoll, in der Halterung eine Kurvenbahn vorzusehen. Die Finger werden in dieser Ausführungsform durch das Verstellelement endseitig verschoben. Ihre Orientierung im Raum wird durch die Kurvenbahn der Halterung definiert, deren Form an die gewünschte Bahn der Finger angepasst ist. Es wäre aber auch denkbar, die Funktion der Kurvenbahn durch eine geeignete räumliche Bewegung des Verstellelements gegenüber der mit einem zylindrischen Loch versehenen Halterung zu realisieren, was durch eine geeignete Aufhängung des Verstellelements an einem Parallelogramm o.ä. verwirklicht werden könnte.

Bei der Ausführungsform mit einem linear gegenüber der Halterung verschiebbaren Verstellelement und einer Kurvenbahn in der Halterung bietet es sich an, die Finger zwischen dem Verstellelement und der Halterung zweifach gegensinnig abzuwinkeln, so dass man eine Art Kurbel mit einer S-Kurvenform erzielt. Diese Form ermöglicht es, beim Verschieben des Verstellelements eine Drehung der Finger um ihre Längsachse und gleichzeitig eine Verschiebung entlang der Kurvenbahn zu erzielen. Die Drehung der Finger um ihre Längsachse kann in eine Kreisbewegung der äußeren Enden der Finger umgesetzt werden, indem man die Finger außerhalb der Halterung wiederum abwinkelt.

Der erfindungsgemäße Strohleitrechen kann an beliebigen Positionen eines Mähdreschers zum Leiten von Stroh verwendet werden, das in einem Schwad abgelegt werden soll. Eine bevorzugte Position ist zwischen der Oberseite einer Strohverteilerhaube eines Strohhäckslers und einer darüber liegenden Stelle des Rahmens des Mähdreschers im Bereich der Strohverteilerhaube. An dieser Stelle kann die Breite des Strohschwads beim Schwadablagebetrieb einstellbar definiert werden. Der Strohleitrechen kann auch in eine Transportstellung verbracht werden, in der er sich nach innen zur Längsmittelebene des Mähdreschers erstreckt. Hier ist es vorteilhaft, wenn durch die Form der Finger, der Halterung und des Verstellelements erzielt wird, dass sich die Finger bei einer Verstellung des Verstellelements um eine imaginäre Achse drehen, die in der vertikalen, sich in Vorwärtsrichtung erstreckenden Ebene erstreckt und etwa schräg nach hinten und oben verläuft. Diese imaginäre Achse könnte ohne Verwendung des erfindungsgemäßen Strohleitrechens nur durch großen Aufwand (s. DE 43 41 764 C) oder unter großem Platzbedarf verwirklicht werden.

Der Strohleitrechen kann in einer bevorzugten Ausführungsform, für die eigenständig Schutz begehrt wird, weiterhin zur Verstellung der Position der Strohverteilerhaube dienen, die an ihrem vorderen Ende am Strohhäckslergehäuse schwenkbar angelenkt ist. Die Halterung des Strohleitrechens ist dazu am Rahmen (und/oder an der Strohverteilerhaube) in unterschiedlichen Positionen anbringbar. Ein Vorteil liegt in der selbsttätigen und zwangsweisen Anpassung der Position des Strohleitrechens an die Position der Strohverteilerhaube. Hier kann auch ein beliebiger anderer Strohleitrechen verwendet werden, beispielsweise mit starr an einer Halterung angebrachten oder auf andere Weise verstellbaren Fingern.

In den Zeichnungen ist ein nachfolgend näher beschriebenes Ausführungsbeispiel der Erfindung dargestellt. Es zeigt:
- Fig. 1: einen Mähdrescher in Seitenansicht und schematischer Darstellung mit einem Strohleitrechen,
- Fig. 2: eine perspektivische Explosionsdarstellung eines erfindungsgemäßen Strohleitrechens,
- Fig. 3: eine Seitenansicht des Strohleitrechens,
- Fig. 4: eine rückwärtige Ansicht des Strohleitrechens,
- Fig. 5: eine Draufsicht auf den Strohleitrechen,
- Fig. 6: eine Seitenansicht des rückwärtigen Bereichs des Mähdreschers aus Figur 1 mit einem in eine Transportposition verbrachten Strohleitrechen,
- Fig. 7: eine Rückansicht des rückwärtigen Bereichs des Mähdreschers aus Figur 1 mit einem in eine Transportposition verbrachten Strohleitrechen,
- Fig. 8: eine Seitenansicht des rückwärtigen Bereichs des Mähdreschers aus Figur 1 mit einem in eine Betriebsposition verbrachten Strohleitrechen, und
- Fig. 9: eine Rückansicht des rückwärtigen Bereichs des Mähdreschers aus Figur 1 mit einem in eine Betriebsposition verbrachten Strohleitrechen.

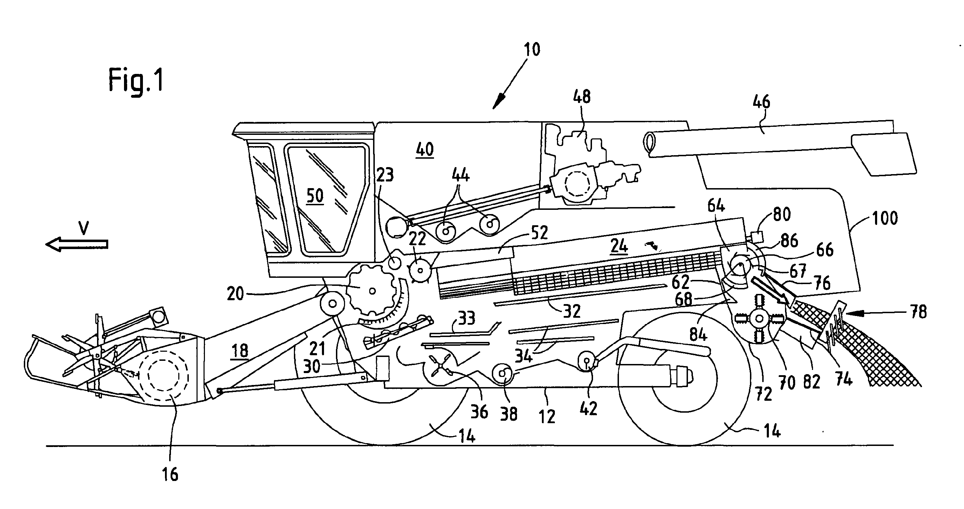

Die Figur 1 zeigt einen selbstfahrenden Mähdrescher 10 mit einem Rahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen.

An den vorderen Endbereich des Mähdreschers 10 ist eine Erntegutbergungsvorrichtung 16 in Form eines Schneidwerks angeschlossen, um Erntegut von dem Feld zu ernten und es nach oben und hinten durch einen Schrägförderer 18 Dresch- und Trennmitteln zuzuführen. Die Dresch- und Trennmittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Eine Abstreifrolle 23 und eine Wendetrommel 22 führen gemeinsam mit einem Zufuhrgehäuse das gedroschene Erntegut von der Dreschtrommel 20 und dem Dreschkorb 21 der Trenneinrichtung 24 in Form eines Axialabscheiders zu. Die Trenneinrichtung 24 wird an ihrer Rückseite durch ein Getriebe 80 angetrieben, das sie mit einem Verbrennungsmotor 48 antriebsmäßig verbindet. Als Trenneinrichtung 24 könnte auch ein Strohschüttler Verwendung finden. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus der Trenneinrichtung 24 austreten, fallen auf einen Schüttelboden 32, der sie zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben und von einem Bediener aus einer Fahrerkabine 50 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Von der Trenneinrichtung 24 werden ausgedroschene Erntegutreste (Stroh) durch einen Auslass 64 an der Unterseite des rückwärtigen Endes des nach hinten geschlossenen Gehäuses der Trenneinrichtung 24 nach unten ausgeworfen. Durch die Wirkung der Fliehkraft und der Schwerkraft fallen die Erntegutreste in einen vertikalen Auswurfschacht, der nach vorn durch eine vordere Wand 62 begrenzt wird. Unterhalb des Auslasses 64 ist eine Auswurftrommel 66 angeordnet, um deren Umfang Mitnehmer 67 verteilt sind. Nach hinten ist die Auswurftrommel 66 von einer rückwärtigen Wand 86 eingeschlossen. Die Auswurftrommel 66 wird um ihre Längsachse, die sich horizontal und quer zur Fahrtrichtung V erstreckt, in Drehung versetzt, in Figur 1 im Gegenuhrzeigersinn. Etwa auf der halben Höhe der vorderen Wand 62 liegt an ihr, etwa unterhalb der Drehachse der Auswurftrommel 66, ein als Ganzes um die Drehachse der Auswurftrommel 66 schwenkbares Strohleitelement 68 an. Das Strohleitelement 68 kann um diese Achse zwischen der in Figur 1 dargestellten Langstrohablageposition und einer nicht zeichnerisch dargestellten Häckselposition verschwenkt werden.

Unterhalb und geringfügig hinter der Auswurftrommel 66 ist in einem Gehäuse 72 ein an sich bekannter Strohhäcksler 70 angeordnet, der um eine horizontale, quer zur Fahrtrichtung verlaufende Achse (in den Figuren im Gegenuhrzeigersinn) rotativ antreibbar ist. Er umfasst einen zylindrischen Körper mit pendelnd daran aufgehängten Häckselmessern, die mit im Gehäuse 72 angeordneten stationären Gegenmessern zusammenwirken, um die Erntegutreste zu häckseln und sie mittels einer mit Strohleitblechen 82 ausgestatteten Strohverteilerhaube 74 etwa über die Schnittbreite des Mähdreschers 10 auf dem Feld zu verteilen.

Das Strohleitelement 68 ist in sich konkav (kreisbogenförmig) gekrümmt und umschließt die Auswurftrommel 66 um einen Winkelbereich von etwa 45° konzentrisch. Es ist an seinen in Querrichtung äußeren Enden um die Achse der Auswurftrommel 66 schwenkbar angelenkt. Das Strohleitelement 68 erstreckt sich in der in Figur 1 wiedergegebenen Langstrohablageposition von der vorderen Wand 62 bis etwa über die Drehachse des Strohhäckslers 70. In dieser Position bewirkt das Strohleitelement 68, dass die ausgedroschenen Erntegutreste von der Auswurftrommel 66 unterhalb einer Auswurfhaube 76, die sich stromab der rückwärtigen Wand 86 befindet, und oberhalb der Strohverteilerhaube 74 schräg nach hinten und unten abgegeben werden.

In der Häckselposition ist das Strohleitelement 68 um die Drehachse der Auswurftrommel 66 (bezüglich der Figur 1 im Uhrzeigersinn) nach hinten verschwenkt. Dadurch wird zwischen der vorderen Wand 62 und der vorderen Kante des Strohleitelements 68 eine Öffnung freigegeben, durch die die Erntegutreste in den Strohhäcksler 70 gelangen. Das Strohleitelement 68 verlängert in dieser Position die rückwärtige Wand 86 nach unten und vorn. In ihrem Bereich unterhalb der Linie, an der das Strohleitelement 68 zum Anliegen kommt, wenn es sich in der Langstrohablageposition befindet, ist die vordere Wand 62 ebenfalls mit Leitkufen 84 versehen, um den Strohhäcksler 70 möglichst gleichmäßig beschicken zu können. Im Strohhäcksler 70 werden die Erntegutreste gehäckselt und schräg nach hinten und unten ausgeworfen. Unterhalb der am Auswurf des Strohhäckslers 70 angeordneten Strohverteilerhaube 74 sind die Strohleitbleche 82 vorgesehen, um die Richtung vorzugeben, in der die Erntegutreste auf den Boden des Feldes abgegeben werden.

Zwischen dem rückwärtigen Ende der Strohverteilerhaube 74 und einer darüber befindlichen Befestigungsstelle am Rahmen 12 unterhalb der Strohausfallhaube 100 erstreckt sich ein Strohleitrechen 78, der zum Führen des Strohs im Schwadablagebetrieb dient.

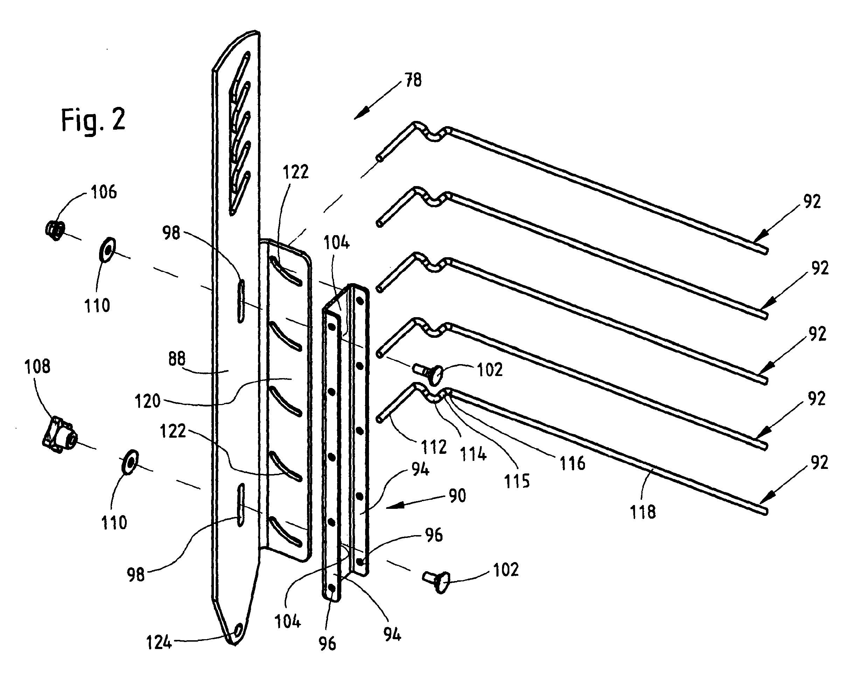

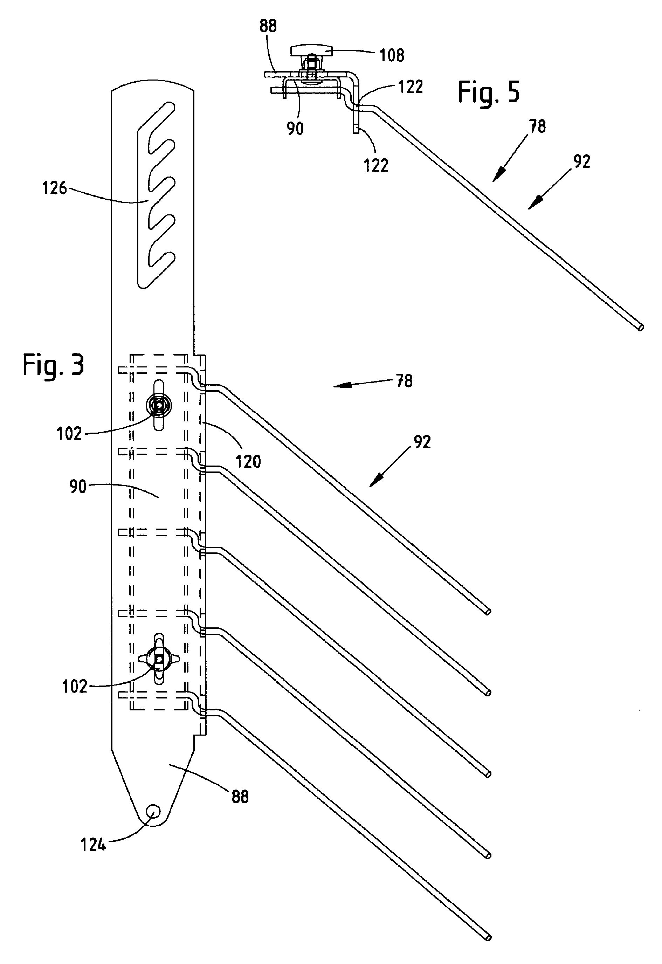

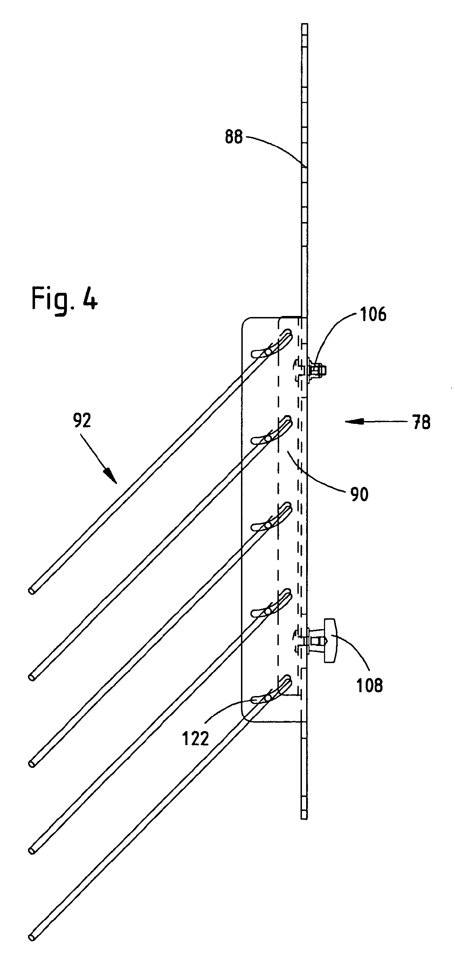

Der Aufbau des Strohleitrechens 78 wird nunmehr anhand der Figuren 2 bis 5 erläutert. Der Strohleitrechen 78 umfasst eine Halterung 88, ein Verstellelement 90 und insgesamt fünf Finger 92. Im montierten Zustand liegt das Verstellelement 90 an der Halterung 88 an und erstreckt sich in dessen Längsrichtung.

Das Verstellelement 90 weist einen U-förmigen Querschnitt auf. Die seitlichen Schenkel 94 des Verstellelements 90 sind mit Öffnungen 96 versehen, die jeweils auf einer gedachten Linie liegen, die quer zur Längsachse des Verstellelements 90 verläuft. Die Halterung 88 weist zwei Langlöcher 98 auf, durch die sich Schrauben 102 erstrecken, die auch entsprechende Löcher 104 in der Basis des Verstellelements 90 durchdringen. An der vom Verstellelement 90 abgewandten Seite der Halterung 88 sind Muttern 106, 108 auf die Schrauben 102 aufgeschraubt. Zwischen den Muttern 106 bzw. 108 und der Halterung 88 befinden sich außerdem Unterlegscheiben 110. Die Mutter 106 ist eine Hutmutter, die in einem definierten Abstand von der Halterung 88 angeordnet wird, so dass sie das Verstellelement 90 verschiebbar an der Halterung 88 hält. Die untere Mutter 108 ist mit einem Handgriff ausgestattet, der ein Lösen und Festziehen der Mutter 108 von Hand erlaubt, um nach Lösen der Mutter 108 das Verstellelement 90 gegenüber der Halterung 88 entlang der Langlöcher 98 verstellen und es anschließend durch Festziehen der Mutter 108 wiederum daran fixieren zu können. Die Schrauben 102 werden vorzugsweise drehfest am Verstellelement 90 gehaltert, so dass sich ein Werkzeug zum Halten der Schrauben 102 erübrigt. Dazu können die Schäfte der Schrauben 102 in den ihren Köpfen benachbarten Bereichen und analog die Löcher 104 mit nicht kreisförmigen Querschnitten ausgestattet werden oder Zahnscheiben zwischen den Köpfen der Schrauben 102 und dem Verstellelement 90 vorgesehen sein. Die Verstellung des Verstellelements 90 könnte auch durch einen fremdkraftbetätigten, automatisch oder ferngesteuerten Aktor erfolgen.

Die Finger 92 sind jeweils gleichartig gebogen. Sie setzen sich jeweils aus einem geraden Endabschnitt 112, einem zweifach gegensinnig um jeweils 90° gebogenen Abschnitt 114, einen darauf folgenden, kurzen Bereich 115, der sich parallel zum Endabschnitt 112 erstreckt, einem weiteren Kurvenabschnitt 116, in dem sie in der Ebene des Abschnitts 114 um etwa 45° gegenüber dem Endabschnitt 112 nach außen gebogen sind, und einem geraden Außenabschnitt 118 zusammen. Die Finger sind in sich starr oder federnd, in der Regel aus Stahl oder Kunststoff.

Die Halterung 88 weist einen seitlichen Schenkel 120 auf, der sich rechtwinklig von der Halterung 88 fort und parallel zu den Schenkeln 94 des Verstellelements 94 erstreckt. Im Schenkel 120 sind fünf Öffnungen in der Form kreissegmentförmiger Kurvenbahnen 122 eingebracht.

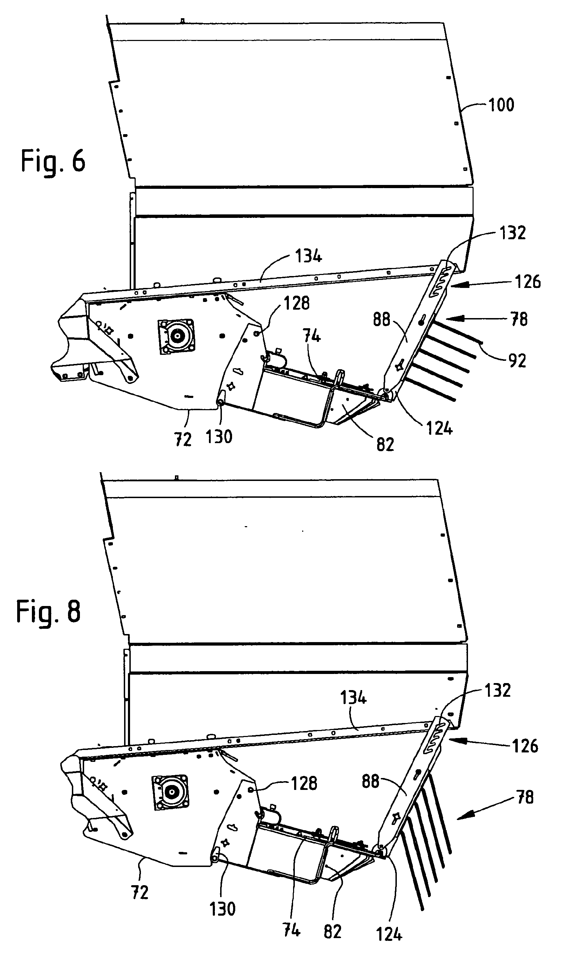

Die Finger 92 erstrecken sich im montierten Zustand jeweils durch die Kurvenbahnen 122 und die Öffnungen 96. Dabei kommen die geraden Endabschnitte 112 in den Öffnungen 96 und die kurzen Bereiche 115 in den Kurvenbahnen 122 zur Anlage. Es ergibt sich eine Zwangsführung der Finger 92 in den Öffnungen 96 und in der Kurvenbahn 122, wobei die kurbelförmigen, gebogenen Abschnitte 114 eine Bewegung des kurzen Abschnitts 115 entlang der zugehörigen Kurvenbahn 122 ermöglichen. Es ist erkennbar, dass sich bei einer Verschiebung des Verstellelements 90 an der Halterung 88 entlang der Langlöcher 98 jeweils der kurze Bereich 115 der Finger 92 in der zugeordneten Kurvenbahn 122 bewegt. Dabei drehen sich die Endabschnitte 112 der Finger 92 in den Öffnungen 96 und dementsprechend auch die kurzen Bereiche 115. Durch die Form der Kurvenbahnen 122 und die Abwinklung im Kurvenabschnitt 116 beschreiben die Endabschnitte 112 bei einer Verstellung des Verstellelements 90 gegenüber der Halterung 88 jeweils räumliche Bahnen, von denen Punkte in den Figuren 6 bis 9 dargestellt sind.

An ihrer Unterseite ist die Halterung 88 mit einer Bohrung 124 ausgestattet, während sich an ihrem oberen Ende eine Reihe durch ein Langloch miteinander verbundener Rastausnehmungen 126 befindet.

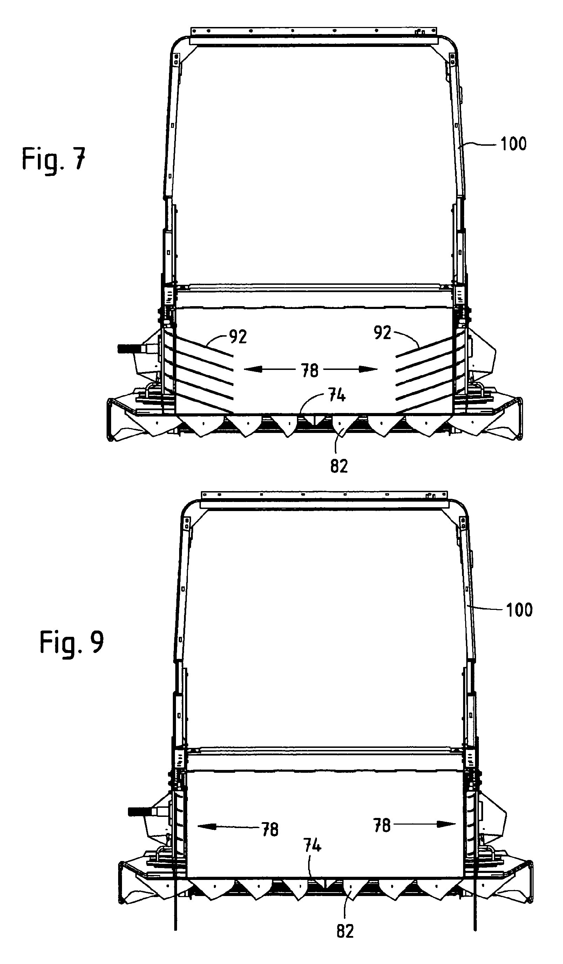

Anhand der Figuren 6 bis 9 sind die Anbringung des Strohleitrechens 78 am Mähdrescher 10 und die bereitgestellten Verstellmöglichkeiten erkennbar. Durch Lösen, Verschieben des Verstellelements 90 gegenüber der Halterung 88 und anschließendes Fixieren mittels der Mutter 108 können die Finger 92 gemeinsam und synchron zwischen einer in den Figuren 6 und 7 dargestellten Transportposition, in der sich die Finger 92 von der Halterung 88 in der Seitenansicht gemäß Figur 6 jeweils schräg nach unten und hinten und in der Rückansicht gemäß Figur 7 schräg nach unten und zur Längsmittelebene des Mähdreschers 10 erstrecken, und einer in den Figuren 8 und 9 dargestellten Schwadablageposition, in der sich die Finger 92 von der Halterung 88 in der Seitenansicht gemäß Figur 8 jeweils gegenüber der Transportposition in einem größeren Winkel nach unten und nur noch geringfügig nach hinten und in der Rückansicht gemäß Figur 9 etwa in Vorwärtsrichtung erstrecken. Die Transportposition wird auch beim Häckselbetrieb eingenommen. In dieser Position geht nur eine geringe Verletzungsgefahr von den Fingern 92 aus. Die Finger 92 werden um imaginäre Achsen gedreht, die sich näherungsweise in Vorwärtsrichtung erstrecken, demgegenüber aber leicht nach hinten und oben abgewinkelt sind. Die stufenlose Verstellbarkeit des Verstellelements 90 ermöglicht auch eine Einstellung beliebiger Zwischenpositionen, insbesondere zum Erstellen eines Schwads mit einer Breite, die geringer als der Abstand zwischen den Halterungen 88 der Strohleitrechen 78 an beiden Seiten des Mähdreschers 10 ist.

Der Verstellbereich des Verstellelements 90 und somit der Finger 92 kann größer sein als in den Figuren 6 bis 9 dargestellt. Vorzugsweise lassen sich die Finger 92 in der Rückansicht zwischen einer Position, in der sie sich vertikal von der Halterung 88 nach unten erstrecken, und einer Position, in der sie sich horizontal nach innen erstrecken, bewegen. In der Seitenansicht sind sie dann analog zwischen einer Position, in der sie sich etwa unter einem Winkel von 45° nach hinten und unten erstrecken, und einer Position, in der sie sich horizontal nach hinten erstrecken, bewegbar. Bei anderen Ausführungsformen kann aber auch der in den Figuren 6 bis 9 gezeigte Verstellweg hinreichen.

Anhand der Figuren 6 und 8 ist außerdem erkennbar, dass die Halterung 88 mittels der Bohrung 124 und eines sich durch sie erstreckenden Stifts um eine horizontal und quer zur Vorwärtsrichtung V verlaufende Achse schwenkbar an der Rückseite der Strohverteilerhaube 74 angelenkt ist. Die Strohverteilerhaube 74 ist in ihrem vorderen Bereich ebenfalls um eine horizontal und quer zur Fahrtrichtung verlaufende Achse schwenkbar am Gehäuse 72 des Strohhäckslers 70 angelenkt. Diese Achse könnte bei den Punkten 128 oder 130 liegen oder mit der Drehachse des Strohhäckslers 70 zusammen fallen. Weiterhin ist an einer Schiene 134, die mit dem Gehäuse 72 des Strohhäckslers 70 und dem Rahmen 12 verbunden ist und sich an der Unterseite der Strohausfallhaube 100 nach hinten erstreckt, ein Stift 132 angeordnet. Der Stift 132 ist jeweils in einer der Rastausnehmungen 126 an der Oberseite der Halterung 88 anordenbar. Durch Auswahl einer der Rastausnehmungen 126 besteht somit die Möglichkeit, den Winkel zwischen der Horizontalen und der Strohverteilerhaube 74 zu verstellen, d.h. die Strohverteilerhaube 74 um die Achse 128 bzw. 130 oder die Drehachse des Strohhäckslers 70 zu verschwenken. Gleichzeitig wird damit der Winkel der Halterung 88 mit den Fingern 92 verändert, wodurch die Orientierung der Finger 92 an die Richtung des Strohflusses an der Oberseite der Strohverteilerhaube 74 angepasst wird. Auch hier könnte ein fremdkraftbetätigter Aktor zur Verstellung der Position der Halterung 88 gegenüber dem Rahmen 12 Verwendung finden.

## Patentansprüche

1. Strohleitrechen (78) mit einer Halterung (88), an der mehrere Finger (92) beweglich angebracht sind, **dadurch gekennzeichnet, dass** der Halterung (88) ein relativ zur Halterung (88) bewegbares Verstellelement (90) zugeordnet ist, und dass die Finger (92) jeweils sowohl an dem Verstellelement (90) als auch an der Halterung (88) anliegen, so dass die Position der Finger (92) relativ zur Halterung (88) durch eine Bewegung des Verstellelements (90) gegenüber der Halterung (88) verstellbar ist.

2. Strohleitrechen (78) nach Anspruch 1, **dadurch gekennzeichnet, dass** die Finger (92) sich durch jeweils eine Öffnung in der Halterung (88) und im Verstellelement (90) erstrecken.

3. Strohleitrechen (78) nach Anspruch 2, **dadurch gekennzeichnet, dass** das Verstellelement (90) gegenüber der Halterung (88) verschiebbar gelagert ist und dass die Öffnung in der Halterung (88) eine Kurvenbahn (122) ist.

4. Strohleitrechen (78) nach Anspruch 3, **dadurch gekennzeichnet, dass** die Finger (92) zwischen dem Verstellelement (90) und der Halterung (88) zweifach gegensinnig abgewinkelt sind.

5. Strohleitrechen (78) nach Anspruch 4, **dadurch gekennzeichnet, dass** die Finger (92) außerhalb der Halterung (88) abgewinkelt sind.

6. Mähdrescher (10) mit einem Strohleitrechen (78) nach einem der Ansprüche 1 bis 5.

7. Mähdrescher (10) nach Anspruch 6, **dadurch gekennzeichnet, dass** die Finger (92) durch eine Bewegung des Verstellelements (90) gegenüber der Halterung (88) zwischen einer Strohleitposition, in der sie sich von der Halterung (88) schräg nach hinten und unten erstrecken, und einer Transportposition, in der sie sich quer zur Fahrtrichtung in Richtung auf die Längsmittelebene des Mähdreschers (10) hin erstrecken, bewegbar sind.

8. Mähdrescher (10) nach Anspruch 6 oder 7, **dadurch gekennzeichnet, dass** die Finger (92) sich bei einer Verstellung des Verstellelements (90) um eine gedachte Achse drehen, die sich in einer durch die Vorwärtsrichtung (V) und die vertikale Richtung aufgespannten Ebene erstreckt und geringfügig nach hinten und oben abgewinkelt ist.

9. Mähdrescher (10) nach einem der Ansprüche 6 bis 8, **dadurch gekennzeichnet, dass** sich die Halterung (88) des Strohleitrechens (78) zwischen einer Strohverteilerhaube (74), an deren Oberseite ausgedroschenes Stroh im Schwadablagebetrieb entlangströmt und einem Rahmen (12) des Mähdreschers (10) erstreckt.

10. Mähdrescher (10) mit einem Strohhäcksler (70), dem eine Strohverteilerhaube (74) zugeordnet ist, an deren Oberseite in einem Schwadablagebetrieb ausgedroschenes Stroh entlangströmt und die an ihrem dem Strohhäcksler (70) benachbarten Ende um eine horizontal und quer zur Vorwärtsrichtung verlaufende Achse (128, 130) schwenkbar gelagert ist, und mit einem mit einer Halterung (88) und daran angebrachten Fingern (92) ausgestatteten Strohleitrechen (78) zur Führung des Strohs im Schwadablagebetrieb, insbesondere nach einem der Ansprüche 6 bis 9, **dadurch gekennzeichnet, dass** die Halterung (88) des Strohleitrechens (78) sich zwischen der Strohverteilerhaube (74) und dem Rahmen (12) des Mähdreschers (10) erstreckt und zur Einstellung des Winkels der Strohverteilerhaube (74) in unterschiedlichen Positionen am Rahmen (12) des Mähdreschers (10) fixierbar ist.

## Claims

1. Straw guide rake (78) with a mounting (88), to which several fingers (92) are movably attached, **characterised in that** an adjusting element (90) movable relative to the mounting (88) is associated with the mounting (88), and that the fingers (92) respectively rest both on the adjusting element (90) and on the mounting (88), so that the position of the fingers (92) is adjustable in relation to the mounting (88) by a movement of the adjusting element (90) relative to the mounting (88).

2. Straw guide rake (78) according to Claim 1, **characterised in that** the fingers (92) respectively extend through an opening in the mounting (88) and in the adjusting element (90).

3. Straw guide rake (78) according to Claim 2, **characterised in that** the adjusting element (90) is disposed to be displaceable relative to the mounting (88), and that the opening in the mounting (88) is a curved path (122).

4. Straw guide rake (78) according to Claim 3, **characterised in that** the fingers (92) are bent twice in opposite directions between the adjusting element (90) and the mounting (88).

5. Straw guide rake (78) according to Claim 4, **characterised in that** the fingers (92) are bent outside the mounting (88).

6. Combine-harvester (10) with a straw guide rake (78) according to one of Claims 1 to 5.

7. Combine-harvester (10) according to Claim 6, **characterised in that** the fingers (92) are movable as a result of a movement of the adjusting element (90) relative to the mounting (88) between a straw guiding position, in which they slope downwards to the rear from the mounting (88), and a transport position, in which they extend transversely to the travel direction towards the central longitudinal axis of the combine-harvester (10).

8. Combine-harvester (10) according to Claim 6 or 7, **characterised in that** upon displacement of the adjusting element (90) the fingers (92) rotate around an imaginary axis, which extends in a plane spanned by the forward direction (V) and the vertical direction and is angled slightly upwards and to the rear.

9. Combine-harvester (10) according to one of Claims 6 to 8, **characterised in that** the mounting (88) of the straw guide rake (78) extends between a straw distributor cowl (74), along the upper side of which threshed straw flows in the swath laying operation, and a frame (12) of the combine-harvester (10).

10. Combine-harvester (10) with a straw chopper (70), which has an associated straw distributor cowl (74), along the upper side of which threshed straw flows and which at its end adjacent to the straw chopper (70) is disposed to pivot around an axis (128, 130) running horizontally and transversely to the forward direction, and with a straw guide rake (78) provided with a mounting (88) and fingers (92) attached thereto for guiding the straw in the swath laying operation, in particular according to one of Claims 6 to 9, **characterised in that** the mounting (88) of the straw guide rake (78) extends between the straw distributor cowl (74) and the frame (12) of the combine-harvester (10) and can be fixed in different positions on the frame (12) of the combine-harvester (10) for adjustment of the angle of the straw distributor cowl (74).

## Revendications

1. Râteau de guidage de paille (78) avec un support (88), auquel plusieurs doigts (92) sont fixés de manière mobile, **caractérisé en ce que** le support (88) correspond à un élément de réglage (90) mobile relativement au support (88), et **en ce que** les doigts (92) reposent respectivement tant contre l'élément de réglage (90) que contre le support (88), de sorte que la position des doigts (92) relativement au support (88) est réglable par un mouvement de l'élément de réglage (90) vis-à-vis du support (88).

2. Râteau de guidage de paille (78) suivant la revendication 1, **caractérisé en ce que** les doigts (92) s'étendent à travers une ouverture respectivement dans le support (88) et dans l'élément de réglage (90).

3. Râteau de guidage de paille (78) suivant la revendication 2, **caractérisé en ce que** l'élément de réglage (90) est monté de manière mobile vis-à-vis du support (88) et **en ce que** l'ouverture dans le support (88) est un chemin incurvé (122).

4. Râteau de guidage de paille (78) suivant la revendication 3, **caractérisé en ce que** les doigts (92) sont coudés deux fois en sens contraires entre l'élément de réglage (90) et le support (88).

5. Râteau de guidage de paille (78) suivant la revendication 4, **caractérisé en ce que** les doigts (92) sont coudés en dehors du support (88).

6. Moissonneuse-batteuse (10) avec un râteau de guidage de paille (78) suivant l'une des revendications 1 à 5.

7. Moissonneuse-batteuse (10) suivant la revendication 6, **caractérisée en ce que** les doigts (92) sont mobiles par un mouvement de l'élément de réglage (90) vis-à-vis du support (88) entre une position de guidage de la paille, dans laquelle ils s'étendent du support (88) en oblique vers l'arrière et le bas, et une position de transport, dans laquelle ils s'étendent transversalement au sens de la marche en direction du plan longitudinal central moyen de la moissonneuse-batteuse (10).

8. Moissonneuse-batteuse (10) suivant la revendication 6 ou 7, **caractérisée en ce que** les doigts (92), lors d'un réglage de l'élément de réglage (90), tournent autour d'un axe imaginaire qui s'étend dans un plan défini par la direction de marche vers l'avant (V) et la direction verticale et est légèrement incliné vers l'arrière et vers le haut.

9. Moissonneuse-batteuse (10) suivant l'une des revendications 6 à 8, **caractérisée en ce que** le support (88) du râteau de guidage de paille (78) s'étend entre un capot distributeur de paille (74), à la face supérieure duquel la paille détachée par battage s'écoule lors du fonctionnement de dépose des andains, et un cadre (12) de la moissonneuse-batteuse (10).

10. Moissonneuse-batteuse (10) avec une hacheuse de paille (70), auquel correspond un capot distributeur de paille (74), le long de la face supérieure duquel s'écoule la paille détachée par battage lors du fonctionnement de dépose des andains et qui est articulée à son extrémité voisine de la hacheuse de paille (70) autour d'un axe (128, 130) s'étendant horizontalement et transversalement à la direction de marche avant, et avec un râteau de guidage de paille (78) équipé d'un support (88) et de doigts (92) qui y sont fixés pour le guidage de la paille en fonctionnement de dépose des andains, en particulier suivant l'une des revendications 6 à 9, **caractérisée en ce que** le support (88) du râteau de guidage de paille (78) s'étend entre le capot distributeur de paille (74) et le cadre (12) de la moissonneuse-batteuse (10) et peut être fixé pour le réglage de l'angle du capot distributeur de paille (74) dans différentes positions au cadre (12) de la moissonneuse-batteuse (10).
